# EUROPEAN PATENT APPLICATION

(11) **EP 1 589 128 A1**
(43) Date of publication of application: **26.10.2005**
(21) Application number: 04705157.8
(22) Date of filing: 26.01.2004
(51) Int. Cl.: C23C 4/10

(54) **CORROSION-RESISTANT MEMBER AND METHOD FOR PRODUCING SAME**

(30) Priority: 28.01.2003 JP 2003018634
(71) Applicant: TOSOH CORPORATION, Shinnanyo-shi, Yamaguchi-ken, 746-8501 (JP)
(72) Inventor: ABE, Masanori, Yokohama-shi, Kanagawa 241-0816 (JP); TAKAHASHI, Koyata, Sagamihara-shi, Kanagawa 229-0011 (JP); ARAI, Kazuyoshi, Yokohama-shi, Kanagawa 227-0043 (JP); TAKAHATA, Tsutomu, Yokohama-shi, Kanagawa 227-0066 (JP); HASHIMOTO, Shinkichi, Sagamihara-shi, Kanagawa 229-1133 (JP); KOHGO, Masanori, Fujisawa-shi, Kanagawa 251-0015 (JP)
(74) Representative: Pautex Schneider, Nicole Véronique
(86) International application number: PCT/JP2004/000652
(87) International publication number: WO 2004/070076

(57) **Abstract**

Members to be used in CVD devices, plasma treatment devices, etc. are exhausted by reaction with a corrosive gas or etching with plasma, and therefore, there were encountered problems such as staining of products due to the generation of particles and a reduction of the yield productivity. Also, glasses resistant to corrosive gases or plasma are weak in the heat resistance, and therefore, applications to be employed were limited.

Members containing a heat-resisting base material having coated thereon a corrosion resistant glass containing at least one element selected from the group consisting of elements of the group 2a, group 3a and group 4a, especially an aluminosilicate or zirconia silicate based glass sprayed coating have high corrosion resistance to corrosive gases and plasma and high heat resistance and are less in the generation of particles.

## Description

### Technical Field

The present invention relates to a member to be used in CVD devices and plasma treatment devices (plasma etching devices) in manufacturing of semiconductors, etc., and so on, and in particular, to a member having high corrosion resistance to corrosive gases or plasma and also high heat-resistant strength.

### Background Art

Corrosive gases are frequently used for plasma etching in the manufacturing step of semiconductors, etc., and cleaning application of CVD devices. For these corrosive gases, fluorine based and chlorine based gases, and the like are used. As the fluorine based gases, CF₄, C₂F₆, C₃F₈, CHF₃/CF₄, SF₆, and so on are used (see, for example, JP-A-2000-223430); and for the Cl based gases, Cl₂, BCl₃, CCl₄, and so on are used (see L. Peters, *Plasma Etch Chemistry: The Untold Story,* Semic. Intl., 15(6), 66 (1992)). Further, it is also proposed to use HF, F₂, or NF₃ (see, for example, JP-A-2000-223430, JP-A-2000-248363, and JP-A-05-090180).

In portions coming into contact with the foregoing gases or plasma containing the foregoing gases, such as vessels, inner walls, and parts in which such corrosive gases are used, ceramics such as quartz, alumina, aluminum nitride or metals such as aluminum and stainless steel are used. However, these members involved such problems that the member reacts with a fluorine based gas to form a fluoride, thereby causing the generation of particles within the device and that the member is exhausted within a short period of time.

For example, a quartz member reacts with a fluorine gas to form SiF₄, which is then sublimated and exhausted. Also, in ceramic sintered bodies such as alumina and aluminum nitride, although a fluoride of aluminum, AlF₃, is hardly sublimated, corrosion advances selectively in the grain boundary or pores of the member, whereby particles are generated due to dropout of crystal particles.

As a method of solving these problems, sintered bodies in which an open porosity of alumina ceramics containing magnesia and silica is controlled to not more than 0.3 % are proposed (see, for example, JP-A-11-278919). However, even in such sintered bodies, corrosion in the crystal grain boundary of sintered particles was unavoidable, and the generation of particles due to dropout of the crystal particles was unavoidable.

As a method of suppressing the generation of particles by making the crystal grain boundary free, it is proposed to use a corrosion resistant amorphous glass material containing Al₂O₃, CaO, MgO, ZrO₂, BaO, and so on (see, for example, JP-A-2002-121047). Also, glass raw materials comprising quartz having from 0.1 to 20 wt % of a metal oxide added thereto are proposed (see, for example, JP-A-2002-137927). However, these corrosion resistant glasses are not only expensive but also insufficient in the heat resistance for using them with good safety in the semiconductor process, and therefore, portions which can be used as vessels or parts to be used in the semiconductor manufacturing process were limited.

On the other hand, since technologies for forming a sprayed coating on the surface of a base material for the purpose of protecting the base material are known, it may be considered to use the foregoing corrosion resistant glasses after coating on a base material having heat resistance by spraying. However, according to the conventional spraying technologies, since the formation of a sprayed coating of glass was difficult, metals or ceramics were principally used in the conventional formation of a protective film by spraying.

As the prior art technologies regarding spraying of vitreous substances, for example, a method of forming a sprayed coating of glass for the purpose of preventing corrosion of metal rolls for printing is disclosed (see, for example, JP-A-64-13324, JP-A-4-99259, and JP-A-11-124663). However, it is described that the conventional glasses to be used for spraying of glass are a glass having a softening point lower than 1,000°C, whereas in glasses having a softening point exceeding 1,000°C, the adhesion is poor and the porosity is increased so that a uniform sprayed coating is not obtained (see, for example, JP-A-64-13324). Also, it is described that since if a ground is an oxide, the adhesion of glass is poor, a metal sprayed coating layer as an undercoating of the sprayed surface of a base material is necessary (see, for example, JP-A-4-99259).

Namely, so far, it was obvious that a sprayed coating of glass could not be formed with good adhesion on an oxide, and there was no technology for spraying a glass having a high softening point of 1,000°C or higher on a base material with good adhesion, and in particular, there was no technology for spraying on a glass-containing oxide with good adhesion. Also, although it is described that in forming a sprayed coating of glass having a low softening point, the temperature control is important, the conventional temperature control was not aimed only at melting the glass raw material to be sprayed by setting up the temperature of a base material at a softening point of the glass or higher (see, for example, JP-A-11-124663).

Also, besides the portions to be corroded by plasma etching, a film formed by the most dominant accumulation of etched substances such as accumulated fluorine based polymers and resists becomes thick whenever etching is repeated, whereby the film-like substances is peeled, thereby causing dusting to stain a film-forming substrate, and therefore, there was encountered such a problem that the frequency of generation of the maintenance is high.

As described previously, in the semiconductor manufacturing process, the step of using a corrosive gas or plasma involved problems such as the generation of particles due to corrosion of the member, staining of products following this, and a reduction of the yield. Also, although corrosion resistant glasses capable of suppressing such problems have been proposed, the corrosion resistant glasses are expensive and insufficient in the heat resistance, and therefore, their applications for use were limited. Also, even if it is intended to spray such a corrosion resistant glass on a heat-resisting member, there was no technology for spraying a corrosion resistant glass having a high softening point on a base material with good adhesion. Also, in using film-forming devices or plasma treatment devices, it was an extremely important problem within the technical field of the invention to prevent the generation of refuses (foreign materials) or particles caused by peeling of film-like substances adhered to members within the device.

### Disclosure of the Invention

Under the foregoing present situation, the present inventors made extensive and intensive investigations. As a result, it has been found that a member comprising a base material sprayed with a corrosion resistant glass sprayed coating containing at least one element of elements consisting of the group of the group 2a, group 3 a and group 4a of the periodic table of element, particularly a corrosion resistant glass sprayed coating of an aluminosilicate glass or zirconia silicate glass containing at least one element of elements consisting of the group of the group 2a, group 3a and group 4a of the periodic table of element has not only especially high corrosion resistance to corrosive gases or corrosive gas-containing plasma but also sufficient heat resistance as a part to be used in portions to be heated. Also, it has been found that the corrosion resistant member becomes high in the corrosion resistance to corrosive gases or plasma as compared with bulk glass members having the same composition. Further, it has been found that for the sake of spraying a corrosion resistant glass having a softening point exceeding 1,000°C on a base material with good adhesion, it is especially effective to not only set up the spraying temperature at a softening point of the spraying raw material glass or higher but also carry out spraying at a temperature at which the most superficial surface of the base material is molten and further that when a corrosion resistant glass is sprayed on an interlayer of an SiO₂-containing glass sprayed coating formed on the base material, the adhesion between the base material and the corrosion resistant glass sprayed coating is good. Moreover, the present inventors have found that a corrosion resistant member having formed therein a spherical protruded layer in which the concentration of at least one of aluminum or zirconia and elements of the group 2a, group 3a and group 4a is low is less in dusting caused by peeling of a film-like substance accumulated on the surface of the corrosion resistant member and led to accomplishment of the invention.

### Brief Description of the Drawings

Fig. 1 is a diagram to show a preferred range of this application in Si-Al-group 3a three-component triangular diagram;
Fig. 2 is a diagram to show a preferred range of this application in Si-Zr-group 3a three-component triangular diagram;
Fig. 3 is a diagram to show a preferred range of this application in Si-Zr-group 2a three-component triangular diagram;
Fig. 4 is a view to show one embodiment of a general plasma spraying device;
Fig. 5 is a view to show one embodiment of a double torch type plasma spraying device; and
Fig. 6 is a photograph to show one embodiment of a formed spherical protruded layer.

In the drawings, reference numerals and signs are as follows.
- 10:: Cathode
- 11:: Anode
- 12:: Plasma gas
- 13:: Spraying powder (supply pot)
- 14:: Spraying distance
- 15:: Base material
- 16:: Glass sprayed coating
- 17:: Power source
- 20:: Cathode
- 21:: Anode
- 22:: Plasma gas (supply pot)
- 23:: Spraying powder (supply pot)
- 24:: Spraying distance
- 25:: Base material
- 26:: Glass sprayed coating
- 27:: Plasma gas (supply pot)
- 28:: Main power source
- 29:: Auxiliary power source

### Best Mode for Carrying Out the Invention

The corrosion resistant member of the invention will be described below in detail.

The corrosion resistant glass sprayed coating of the invention must be an amorphous glass. This is because when the corrosion resistant glass sprayed coating is crystalline, the crystal grain boundary is selectively etched in a corrosive gas atmosphere, resulting in causing the generation of particles due to dropout of the crystal grains. Whether or not the corrosion resistant glass is amorphous can be confirmed by observing whether or not a crystalline diffraction peak has appeared in evaluating the sprayed coating by X-ray diffraction.

The composition of the corrosion resistant glass sprayed coating of the corrosion resistant member of the invention contains at least one element selected from the group consisting of elements of the group 2a, group 3a and group 4a of the periodic table of element. The group 2a as referred to herein means an alkaline earth metal element including Be, Mg, Ca, Sr and Ba; the group 3a as referred to herein means Sc, Y or a lanthanoid element; and the group 4a as referred to herein means Ti, Zr or Hf. The glass containing an element of the group 2a, group 3a or group 4a is low in the reactivity with a corrosive gas or its plasma; even if a reaction with fluorine in the corrosive gas occurs, the formed substances are a high-boiling compound; and it is effective for suppressing etching caused by the plasma or corrosive gas.

Among amorphous glasses containing the foregoing element, the corrosion resistant glass sprayed coating of the invention is especially preferably an aluminosilicate glass or a zirconia silicate glass. Since aluminum or zirconium contained in the aluminosilicate glass or zirconia silicate glass forms only a high-boiling compound together with fluorine likewise the foregoing element of the group 2a or group 3a, it is effective for suppressing etching caused by the fluorine based plasma or corrosive gas.

The glass of the corrosion resistant glass sprayed coating to be used in the invention is preferably an aluminosilicate glass or zirconia silicate glass containing at least one of Y, La and Ce especially among the foregoing compositions.

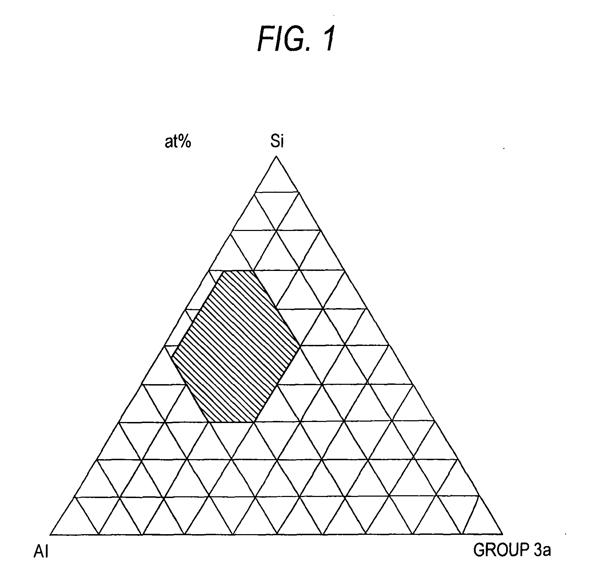

It is preferable that the composition of the corrosion resistant glass sprayed coating of the invention comprises from 1 to 30 atomic % of the element of the group 2a, group 3a or group 4a and from 20 to 99 atomic % of the Si element in terms of an atomic ratio of metal atoms exclusive of oxygen. In particular, in the case of an aluminosilicate glass, the composition preferably comprises from 20 to 98 atomic % of the Si element, from 1 to 30 atomic % of the Y, La or Ce element, and from 1 to 50 atomic % of the Al element. Of these, it is especially preferable that the aluminosilicate glass has a composition such that the atomic ratio of the respective metal elements (Si:Al:group 3a) falls within the range connecting respective points of (70:20:10), (50:20:30), (30:40:30), (30:50:20), (45:50:5) and (70:25:5). This range is shown in Fig. 1.

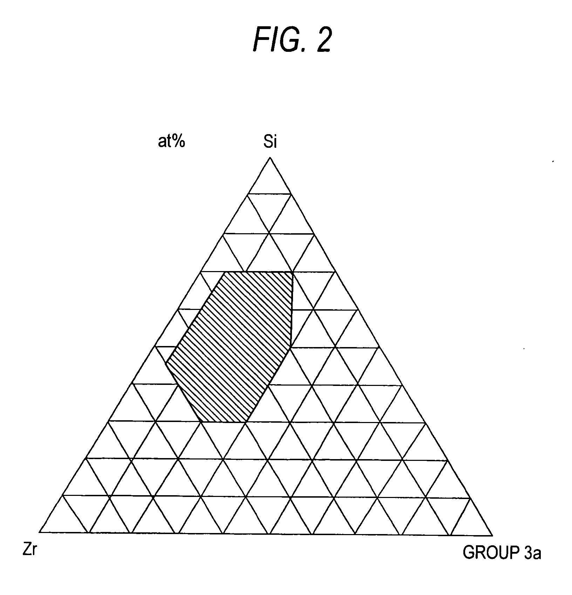

Also, in the case of a zirconia silicate glass, the composition preferably comprises from 20 to 98 atomic % of the Si element, from 1 to 30 atomic % of the Y, La or Ce element, and from 1 to 50 atomic % of the Zr element. Of these, it is especially preferable that the zirconia silicate glass has a composition such that the atomic ratio of the respective metal elements (Si:Zr:group 3a) falls within the range connecting respective points of (70:25:5), (70:10:20), (50:20:30), (30:40:30), (30:50:20) and (45:50:5). This range is shown in Fig. 2.

Further, of these, it is especially preferable that the zirconia silicate glass has a composition such that the atomic ratio of the respective metal elements (Si:Zr:group 3a) falls within the range connecting respective points of (70:25:5), (70:10:20), (50:22:28), (30:42:28), (30:50:20) and (45:50:5).

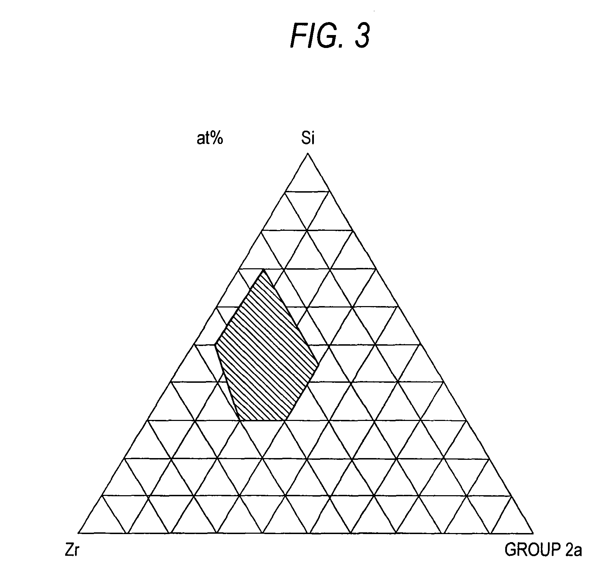

Also, in the case of a group 2a-containing zirconia silicate glass, it is preferable that the zirconia silicate glass has a composition such that the atomic ratio of the respective metal elements (Si:Zr:group 2a) falls within the range connecting respective points of (70:25:5), (45:25:30), (30:40:30), (30:50:20) and (50:45:5). This range is shown in Fig. 3. Within the foregoing composition ranges, the glass is in a stable region and is hardly crystallized. On the other hand, when the composition falls outside such a range and the concentrations of Al or Zr and the group 2a or group 3a element are high, the glass is liable to be crystallized, and the grain boundary and pores are formed, from which corrosion advances, thereby likely causing the generation of particles. Further, a coefficient of thermal expansion of the corrosion resistant glass sprayed coating is increased, and the corrosion resistant glass sprayed coating is liable to peel apart from the base material. Also, when the concentrations of Al or Zr and the group 2a or group 3a element are low, the spraying powder is hardly molten at the time of spraying, and the sprayed coating is liable to contain many pores. The corrosion advances from the pores, thereby likely causing the generation of particles.

Although the softening point of the foregoing glass to be used in the invention varies depending upon the composition, it ranges from 1,000 to 1,700°C, the value of which is higher than the softening point of glasses which have been used in spraying so far.

The base material to be used in the invention is not particularly limited, but it is preferred to use ones having high heat resistance or high heat conductivity, including heat-resisting glasses such as quartz glass, Vycor, and Pyrex; metals such as stainless steel and inconel; and ceramics such as mullite.

The surface of the base material to be used preferably has a surface roughness Ra of from 1 to 50 µm. By setting up the surface roughness at from 1 to 50 µm, the adhesion between the corrosion resistant glass sprayed coating and the base material is enhanced. When the surface roughness Ra is less than 1 µm, the corrosion resistant glass sprayed coating is liable to peel apart from the base material, and it is difficult to uniformly coat the corrosion resistant glass sprayed coating on the base material. On the other hand, when the surface roughness Ra exceeds 50 µm, it is difficult to smoothen the surface of the corrosion resistant glass sprayed coating, and it is difficult to suppress etching caused by the plasma or corrosive gas.

Although the thickness of the corrosion resistant glass sprayed coating of the invention is not limited, it is preferably from 0.01 mm to 3 mm, and especially preferably from 0.01 to 0.5 mm. When the thickness of the corrosion resistance glass sprayed coating is larger than this range, the corrosion resistant glass sprayed coating is liable to cause cracking or peeling due to a difference in a coefficient of thermal expansion from the base material. On the other hand, when it is less than 0.01 mm, the corrosion resistant glass sprayed coating is insufficient as a protective film. The thickness of the corrosion resistant glass sprayed coating can be confirmed by microscopic observation of a cross section of the member, by composition analysis of constitutional elements in a cross section of the member by EPMA (X-ray microanalyzer), or the like.

The surface roughness Ra of the corrosion resistant glass sprayed coating of the corrosion resistant member of the invention is preferably from 0.01 to 5 µm, and especially preferably less than 2 µm. When the corrosion resistant glass sprayed coating is poor in the surface smoothness so that it becomes rough, in particular, an edge portion in the protruded shape as formed on the surface of the corrosion resistant glass sprayed coating is selectively etched by the plasma or corrosive gas, thereby likely causing the generation of particles.

It is especially preferable that the corrosion resistant member of the invention has an interlayer of an SiO₂-containing glass sprayed coating having a softening point of 1,500°C or higher between the base material and the corrosion resistant glass sprayed coating. In the case where the base material and the corrosion resistant glass sprayed coating are used at high temperatures, a stress may possibly be generated due to a difference of the coefficient of thermal expansion therebetween on the junction surface between the base material and the glass sprayed coating, whereby the both are liable to peel apart from each other. Then, by providing an interlayer of an SiO₂-containing glass sprayed coating between the base material and the corrosion resistant glass sprayed coating to relieve the stress, it is possible to keep the adhesion between the base material and the corrosion resistant glass sprayed coating even by using the member at high temperatures. Also, in spraying of a glass, the sprayed glass raw material is molten and flied up above the substrate by the spraying gas, thereby likely causing the generation of bubbles. However, when an interlayer of an SiO₂-containing glass sprayed coating having a softening point of 1,500°C or higher is present, a part of the corrosion resistant glass sprayed coating is molten into the interlayer so that the sprayed coating is liable to be saved on the spraying surface. Thus, the incorporation of air bubbles is prevented, thereby forming a minute corrosion resistant glass sprayed coating.

The corrosion resistant member of the invention is comprised of a base material and a corrosion resistant glass sprayed coating, or a base material, an interlayer of an SiO₂-containing glass sprayed coating and a corrosion resistant glass sprayed coating. However, in the invention, it is preferable that these are not merely laminated but form a molten layer having been molten at each interface. In the case where a corrosion resistant glass sprayed coating is laminated on a base material whose surface has been roughed by blasting, etc. without forming a molten layer, the adhesion is obtained to some extent by the matter that the corrosion resistant glass sprayed coating bites into the roughed surface of the base material. However, when used at high temperatures, peeling likely occurs due to a difference of the coefficient of thermal expansion between the base material and the corrosion resistant glass sprayed coating. According to the member of the invention, especially high adhesion is obtained by the matter that not only the corrosion resistant glass sprayed coating bites into the surface of the base material having a surface roughness Ra of from 1 to 50 µm, but also a molten layer is formed at the interface.

Although the thickness of the foregoing molten layer is not particularly limited, it is preferably from 10 to 500 µm. When the thickness of the molten layer is less than 10 µm, the adhesion is insufficiently revealed; and when it is 500 µm or more, the thickness of a portion having corrosion resistance becomes thin, and therefore, such is not preferable.

The formation of the foregoing molten layer can be confirmed by composition analysis of the junction surface between the corrosion resistant glass sprayed coating and the base material, or of the interlayer of the SiO₂-containing glass sprayed coating in a cross section of the corrosion resistant member by EPMA. In the case where a molten layer is formed, the composition elements belonging to both the corrosion resistant glass sprayed coating and the base material can be confirmed in the molten layer.

The corrosion resistant member of the invention is not one in which the corrosion resistant glass and the base material are merely combined but one in which the corrosion resistance to a corrosive gas or plasma is enhanced as compared with the conventional bulk corrosion resistant glass members. In the conventional bulk corrosion resistant glass members, the corrosion resistance was scattered. Causes of scattering are not clear. However, for example, in bulk members, for the sake of smoothening the surface of the member, polishing processing was essential. Therefore, it may be considered that a defect caused due to the polishing processing is likely formed on the glass surface, whereby corrosion advances starting from this defect. In contrast, in the corrosion resistant member of the invention, since the smoothening of the surface is carried out only by heating of a spraying flame, it may be considered that a defect caused due to mechanical processing as the starting point of the corrosion is not formed, whereby the performance exceeding bulk members is revealed. Also, in the corrosion resistant member of the invention, in particular, in the case where a base material having high heat conductivity is used, it may be considered that heat diffusion of the surface of the corrosion resistant glass sprayed coating is promoted, whereby a corrosion reaction of the surface of the subject corrosion resistant glass sprayed coating is suppressed. Further, in the conventional bulk glasses, in using the group 3a having a large atomic weight, etc., the group 3a element is liable to sink in the glass melt so that it is difficult to make the composition uniform. Accordingly, a portion having a heterogeneous composition as the starting point of the corrosion was likely formed. In contrast, according to the method of the invention, it may be considered that since the corrosion resistant glass sprayed coating is formed in the fully molten state within the range of the thickness of the corrosion resistant glass sprayed coating, a heterogeneous composition is hardly formed.

Next, the production process of the corrosion resistant member of the invention will be described below.

The sprayed coating of the corrosion resistant member of the invention can be formed by plasma spraying, flame spraying, or high-velocity flame spraying. Also, a dense and transparent sprayed coating can be produced by forming a corrosion resistant glass sprayed coating while melting the surface of the base material by a spraying flame.

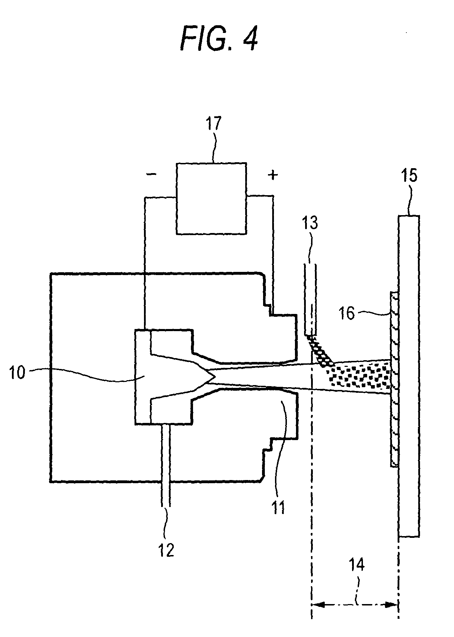

It is preferable that the corrosion resistant glass sprayed coating of the invention is formed in such a manner that the base material temperature after spraying is in the range of from 100°C to 400°C. Such a base material temperature range is applicable to the case where spraying is carried out by a flame in the turbulent state having a plasma flame length of approximately 50 mm using a usual plasma spraying device. According to this spraying method, a thick coating is formed by melting only a spraying powder by a plasma flame and spraying the spraying powder molten by a spraying gas onto the base material. Although the coating prepared by spraying under such a condition is opaque, it is possible to obtain a comparatively dense coating. For the sake of obtaining such a spraying flame, for example, in the case of a spraying device shown in Fig. 4, a condition wherein an output is 30 kW or more, and a spraying distance is approximately 100 mm can be enumerated. In a sprayed coating formed under such a condition, even when the coating thickness is 0.2 mm or more, the coating is hardly cracked.

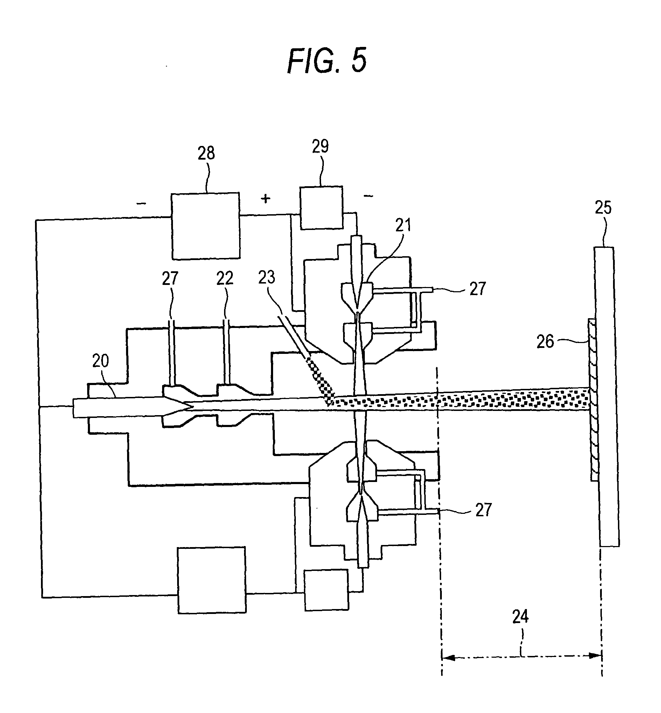

In corrosion resistant members to be used at high temperatures in, for example, CVD devices, a transparent and dense sprayed coating is considered necessary. For the use in such a site, it is possible to form a transparent and dense sprayed coating by achieving spraying while melting the base material surface by a spraying flame in the laminar state. For the purpose of achieving this spraying, for example, by using a double torch type plasma spraying device as shown in Fig. 5, a laminar plasma flame having a length of several hundreds millimeters can be formed, and the spraying can be carried out while melting the base material surface by this flame. Although the sprayed coating formed by this spraying method is dense, when the coating thickness exceeds 0.2 mm, cracks may possibly be formed due to a residual stress of the sprayed coating.

The spraying raw material to be used in the invention is a raw material having a glass composition containing at least one element of the group 2a and group 3a, and a raw material in the powdered form is preferable for use. The powdered raw material having a glass composition containing any one element of the group 2a, group 3a and group 4a can be, for example, prepared by melting a mixture of silica and powdered granules of an oxide of the group 2a, group 3a or group 4a, or in the case where the glass is an aluminosilicate or zirconia silicate, a mixture of an alumina or zirconia powder with a silica powder and an oxide of the group 2a, group 3a or group 4a in a prescribed proportion by electric melting or the like to prepare a glass ingot and then pulverizing it. Also, the powdered raw material can be obtained by a method of formulating a mixed powder of a silica powder, an oxide of the group 2a, group 3a or group 4a, an alumina powder, and a zirconia powder into a slurry, subjecting the mixed slurry to spray drying to prepare granules, and then sintering the granules or other methods.

Although the particle size of the raw material powder to be used for spraying is not limited, it is preferably from 20 to 100 µm in terms of mean particle size. When the mean particle size is less than 20 µm, since the raw material powder itself does not have sufficient fluidity, it is difficult to uniformly supply the raw material into the spraying flame. Also, when the mean particle size exceeds 100 µm, melting of the sprayed particles becomes non-uniform, whereby the adhesion of the resulting sprayed coating to the base material is liable to become worse.

In forming the corrosion resistant glass sprayed coating, it is preferred to achieve spraying after pre-heating the surface of the base material in advance. In melting the surface of the base material, what the surface of the base material is pre-heated in advance is effective for preventing cracking of the base material due to thermal shock and obtaining a corrosion resistant glass sprayed coating having high adhesion. The pre-heating temperature varies depending upon the kind of the base material to be used. When the surface is molten by a spraying flame, for example, in the case of a quartz glass base material, the pre-heating temperature is preferably in the range of from 400 to 1,500°C, and especially preferably from 400 to 800°C. When the pre-heating temperature is increased too much, crystallization of the glass advances, and therefore, such is not preferable. The pre-heating may be carried out by heating the base material by an external heater or exposing the base material with a spraying flame without supplying the raw material, or the like. The pre-heating temperature can be measured by a thermocouple from the back surface of the base material or measured by a non-contact radiation thermometer or the like.

In spraying of the invention, a distance between a spraying gun and a base material in exposing the base material with a spraying flame and a spraying power to be applied vary depending upon a device to be used. For example, in the case of a usual plasma irradiation device as shown in Fig. 4, for the sake of obtaining a dense sprayed coating, a condition wherein a spraying distance between the base material and a powder supply pot located in the tip of the spraying gun is approximately 50 mm, and a spraying power is 30 kW or more is enumerated.

The spraying method to be employed in the invention is preferably plasma spraying. Besides the plasma spraying, flame spraying or other methods may also be employed. In the case of producing a vitreous sprayed coating, for the sake of obtaining a dense sprayed coating, usual spraying by a usual plasma flame in the turbulent state is preferable. However, for the sake of obtaining a dense sprayed coating, among the plasma spraying methods, spraying by a laminar plasma flame using a double torch type plasma spraying device is preferable. Fig. 5 shows an outline of a double torch type plasma spraying device. In the case of a double torch type plasma spraying device, since a laminar plasma flame having a length of several hundreds millimeters (usually, a plasma flame in the turbulent state having a length of approximately 50 mm) can be formed, even when the spraying distance is 100 mm, it is possible to obtain a sprayed coating having high adhesion to the substrate. In the case of flame spraying, the spraying is preferably carried out using a combination of a gas having a high flame temperature such as oxygen and acetylene or hydrogen. In the case of a double torch type plasma spraying device as shown in Fig. 5, it is especially preferable that the spraying distance between the base material and the powder supply pot located in the tip of the spraying gun is in the range of from 60 to 150 mm and that the spraying power is in the range of from 10 to 25 kW.

In forming the corrosion resistant glass sprayed coating in the invention, for the sake of obtaining a dense sprayed coating, the surface of the base material must be molten by the foregoing pre-heating and heating of the spraying flame. In the case of plasma spraying, the temperature of the spraying flame is generally from 3,000 to 20,000°C. In the invention, the foregoing pre-heated base material surface is molten by the subject spraying flame.

For example, in the case of using quartz glass as the base material, the surface is molten at the surface temperature of the base material of from 1,600 to 2,100°C. Also, when the temperature is set up at from 1,500 to 2,000°C for Vycor, from 800 to 1,200°C for Pyrex, from 1,300 to 1,900°C for metals such as stainless steel and inconel, and from 1,800 to 2,400°C for ceramics such as mullite, respectively, the surface is molten. These temperatures are a temperature of the surface of the base material, and it is not required that the whole be set up at this temperature. When the whole of the base material is set up at the foregoing temperature, the base material itself is softened and bent, and therefore, such is a problem.

It is difficult to directly measure the temperature of the base material surface at the time of spraying. However, when the base material surface has reached the melting temperature thereof, since the base material surface is emitted especially brightly, such can be visually confirmed. Whether or not the base material surface has been actually molten can be confirmed by observing whether or not a molten layer is formed at the interface between the base material and the sprayed coating after spraying.

Also, in order that when the temperature of the base material surface is set up at the foregoing temperature, the base material may not be cracked by thermal shock, it is preferred to keep the temperature of the base material at a temperature of from approximately 200 to 1,000°C lower than the melting temperature by the foregoing pre-heating or a combination thereof with external heating other than the spraying flame.

In the invention, it is preferable that by melting the surface of the corrosion resistant glass sprayed coating by a praying flame, the surface is smoothened so as to have a surface roughness Ra of from 0.01 to 5 µm, and especially from 0.01 to 3 µm. By smoothening the surface of the corrosion resistant glass sprayed coating, corrosion resistance to plasma and corrosive gases is especially increased.

According to the foregoing melting treatment, by simultaneously melting the base material surface and the corrosion resistant glass sprayed coating, a corrosion resistant glass sprayed coating having good corrosion resistance and adhesion can be formed within a short period of time.

As the base material to be used in the invention, ones having a surface roughness Ra of from 1 to 50 µm are preferable. When a base material having a smooth surface is used, the sprayed corrosion resistant glass hardly remains on the base material surface and moves on the base material surface due to a wind pressure of the flame at the time of spraying. Accordingly, the yield and speed of film formation become slow, and the thickness may possibly become non-uniform. In contrast, in the case where the base material surface is made to have a surface roughness Ra of from 1 to 50 µm, it is possible to obtain a uniform thickness free from segregation of the corrosion resistant glass sprayed coating.

As a method of making the base material surface have a surface roughness Ra of from 1 to 50 µm, a method of spraying a sprayed coating having such a surface roughness on the base material in advance, or a method of subjecting the base material itself to blasting treatment or a combination of blasting treatment and chemical etching with hydrofluoric acid, etc., can be enumerated. In particular, it is preferred to form an SiO₂-containing glass sprayed coating having a softening point of 1,500°C or higher. The reason why the formation of an interlayer of an SiO₂-containing glass sprayed coating is preferable resides in the matter that in addition to relief of a stress between the base material and the corrosion resistant glass sprayed coating, silica is liable to form a proper molten layer together with the corrosion resistant glass, whereby the adhesion between the base material and the corrosion resistant glass sprayed coating is enhanced.

In the case where the corrosion resistant member of the invention is used in vessels or parts of film-forming devices or plasma treatment devices, separately from a site to be etched, there is a site where etched substances such as fluorine based polymers and resists are most dominantly accumulated. Such materials can be used in such a site. That is, this member is a member having formed therein a spherical protruded layer due to the matter that the most superficial surface layer of the sprayed coating is lower than the internal sprayed coating with respect to the concentration of at least one of aluminum or zirconium and elements of the group 2a, group 3 a and group 4a. Although the reason why such a spherical protruded layer is formed is not clear, it may be considered that when the concentration of at least one of aluminum or zirconium and elements of the group 2a, group 3a and group 4a are low, not only the melting point of the spraying raw material which becomes a glass is increased, but also the viscosity becomes high at the time of spraying, whereby the spherical shape is kept even after collision with the base material. When the protrude layer is present on the surface, in addition to high corrosion resistance inherent to the material, the retention properties of the film-like substance accumulated on the surface of the corrosion resistant member are enhanced, whereby the generation of particles can be suppressed. With respect to the melting point of the protruded layer of the outermost surface of the sprayed coating and the internal sprayed coating, it is preferable that the protruded layer of the most superficial surface of the sprayed coating has a melting point of 1,500°C or higher. When the melting point of the protruded layer is 1,500°C or higher, the viscosity is increased, and unevenness of the sprayed coating surface becomes large.

The corrosion resistant member of the invention can be used in vessels or parts of film-forming devices or plasma treatment devices. With respect to a method of using the corrosion resistant member, the corrosion resistant material can be used in a site coming into contact with a corrosive gas or plasma in these devices. More specifically, it is enumerated to use it as a ring-like focus ring or a bell-jar.

The film-forming device as referred to herein includes, for example, a CVD (chemical vapor deposition) device and a PVD (physical vapor deposition) device. It is general to clean up reaction tubes, bell-jars, and the like with a fluorine based gas after the use. In this case, there were encountered problems such as corrosion due to the cleaning and the generation of particles caused thereby. However, by using the corrosion resistant member of the invention, these problems are solved.

Also, the plasma treatment device as referred to herein includes, for example, a plasma etching device and a plasma cleaning device and means a device of exposing an article placed within the device with plasma, thereby peeling or cleaning up the surface of the article. Since in ring-like focus rings or bell-jars, etc. of these devices, etching with fluorine based plasma is carried out, the generation of particles was problematic in a site where a part within the device comes into contact with a corrosive gas or plasma. Similarly, even in this case, when the corrosion resistant part of the invention is used, it is hardly corroded and is less in the generation of particles.

### Examples

The invention will be described below in detail with based on the Examples, but it should not be construed that the invention is limited only to these Examples.

### Example 1

### 1) Preparation of base material:

On a quartz glass base material, nitrogen was flown as a plasma gas at a rate of 5 SLM to form plasma with a power of 21 kW using a double torch type plasma spraying device as shown in Fig. 5, and a spraying gun was moved at a rate of 80 mm/min while adjusting a spraying distance at 80 mm without supplying a raw material powder, thereby pre-heating the quartz glass base material. At this time, the plasma was in the laminar state with a length of about 30 cm. Next, a quartz powder was supplied at a rate of 4.5 g/min and sprayed while moving the spraying gun at a rate of 160 mm/sec. The subject sprayed surface was exposed with plasma without supplying a raw material powder while moving the spraying gun at a rate of 300 mm/min, thereby melting a powdered substance adhered onto the surface. There was thus prepared a quartz glass base material coated with a quartz sprayed coating having a surface roughness Ra of 15 µm (base material A).

Further, a Vycor sprayed coating as a borosilicate glass was coated on a quartz glass material in the same manner as described above, to prepare a quartz glass base material having a surface roughness Ra of 15 µm (base material B). Next, a quartz glass base material having a surface roughness Ra of 6 µm as treated only by blasting (base material C); a quartz glass base material having a surface roughness Ra of 7 µm as treated with 24 % hydrofluoric acid after blasting (base material D); a stainless steel base material having a surface roughness of 10 µm as treated by blasting (base material E); a mullite base material having a surface roughness of 5 µm as treated by blasting (base material F); and a quartz glass base material having a surface roughness Ra of 15 µm as prepared by coating a quarts glass sprayed coating on a Vycor base material (base material G) were prepared.

### 2) Preparation of raw material powder for spraying:

Oxides of respective metal elements shown in Table 1 were mixed, and the mixture was then molten by heating at 1,700°C to prepare a glass body of 150 mmφ × 20 mmt. The subject glass body was pulverized and classified to prepare a glass spraying powder having a particle size of from 38 to 105 µm (mean particle size: 60 µm).

### 3) Formation of corrosion resistant glass sprayed coating:

Using each of the various base materials prepared in 1), nitrogen was flown as a plasma gas at a rate of 5 SLM (standard litter per minute) using a double torch type plasma spraying device as shown in Fig. 5, and a spraying gun was moved at a rate of 160 mm/sec while adjusting a spraying distance at 100 mm to form plasma with a power of from 11 to 20 kW, thereby pre-heating the base material without supplying a raw material powder.

Next, the glass spraying powder as prepared in the foregoing method was once sprayed at a supply rate of 2 g/min while moving a spraying gun at a rate of 240 mm/sec and at a pitch of 4 mm, to form a corrosion resistant glass sprayed coating. Continuously, plasma with a power of from 21 to 25 kW was exposed on the formed corrosion resistant glass sprayed coating without supplying the spraying raw material powder while moving the spraying gun at a spraying distance of 80 mm and at a rate of from 20 to 80 mm/sec, thereby melting the corrosion resistant glass sprayed coating and the base material surface. The condition for melting the surface of each base material was a condition under which in applying the spraying flame in the absence of the corrosion resistant glass sprayed coating, the base material surface was strongly emitted white or yellowish white.

### 4) Performance evaluation-1 (corrosion resistance):

Using a corrosion resistant member sprayed with each of the corrosion resistant glasses having a variety of compositions as prepared in 3), measurement tests of the etching rate and the particle amount at the time of exposing it with fluorine based gas-containing plasma were carried out. The composition of the surface of the corrosion resistant glass sprayed coating was measured by fluorescent X-ray analysis, and the composition at the interface with the base material was measured by EPMA. The formation of a molten layer was observed in all of the interfaces. Also, in the base material having an interlayer prepared therein, the thickness of the interlayer was 150 µm. With respect to the etching condition, the pressure within a reaction treatment chamber was adjusted at 1 Torr, a CF₄/O₂ gas was used as the reaction gas, and a high-frequency electric power of 300 W was applied between electrode plates, to generate plasma. The etching thickness was measured using a level difference measurement method, and the particle generation was evaluated by observing particulate substances on the surface of the corrosion resistant member by a scanning electron microscope. The results were shown in Table 1. All of the corrosion resistant members had a low etching rate as 0.2 µm/hr, was excellent in the corrosion resistance, and was less in the particle generation.

### 5) Performance evaluation-2 (heat resistance (thermal cycle peeling test)):

Heating of a corrosion resistant member sprayed with each of the corrosion resistant glasses having a variety of compositions as prepared in 3) to 800°C in air and cooling to room temperature were repeated. In members using the base materials A, B and G, peeling between the base material and the corrosion resistant glass sprayed coating was not observed after repeating heating and cooling ten times. However, in members using a base material by blasting or blasting and etching (base materials C, D, E and F), peeling was partly observed, and ones provided with an interlayer made of an SiO₂-containing glass sprayed coating were excellent in the adhesion against the thermal cycle.

### Example 2

### 1) Formation and evaluation of corrosion resistant sprayed coating:

Using a spraying powder prepared from an oxide of each of metal elements shown in Table 2 in the same manner as in Example 1-2) for the base material D prepared in Example 1-1), nitrogen was flown as a plasma gas at a rate of 16 SLM to form plasma with a power of 32 kW using a double torch type plasma spraying device as shown in Fig. 5, and the plasma was sprayed 25 times at a spraying distance of 100 mm and a flow rate of the raw material powder of 7 g/min while moving a spraying gun at a rate of 400 mm/sec and at a pitch of 3 mm, to form a corrosion resistant sprayed coating. At this time, the plasma flame was in the turbulent state. For the sprayed coating, the coating quality was confirmed as the performance evaluation by observing a cross section of the sprayed coating by SEM; and dense one was designated as "O", and porous one was designated as "×". Also, the vitrification was confirmed by the X-ray diffraction; and the case where the diffraction pattern was only a hollow pattern exhibiting amorphousness was designated as "O", and the case where a peak exhibiting the presence of a crystalline substance was designated as "×". The results are shown in Nos. 21 to 35 of Table 2. The thickness of the film-formed sprayed coating exceeded 0.30 mm. Of these sprayed coatings, the samples in which the vitrification was confirmed were evaluated with respect to the corrosion resistance in the same manner as in Examples 1-4). All of the corrosion resistant members had a small etching rate as not more than 1.0 µm/hr and were excellent in the corrosion resistance. In particular, Nos. 22, 24, 25, 29, 30, 33 and 34 had a dense composition, had a small etching rate as not more than 0.4 µm/hr, and were very excellent in the corrosion resistance.

### 2) Formation of surface spherical protruded layer:

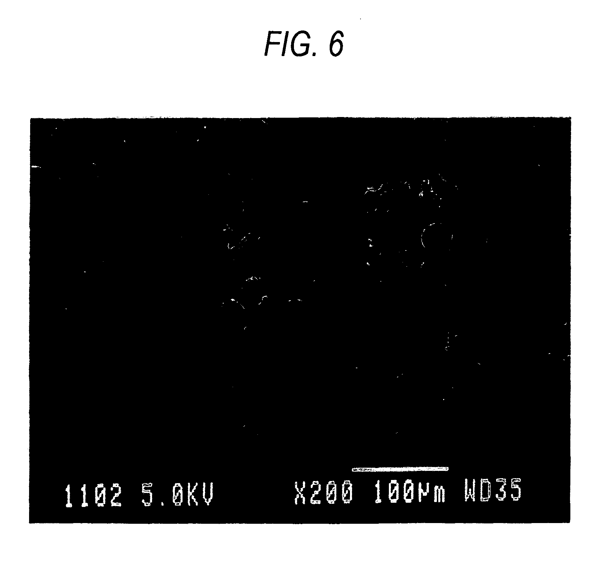

An internal sprayed coating having an internal composition of No. 36 of Table 2 was sprayed on the base material D prepared in Example 1-1) under the same condition as described above in 1), followed by spraying with a surface composition of No. 37 of Table 2 under the same condition as described above in 1), except for changing the flow rate of the raw material powder to 4 g/min and changing the number of times to 5. There was thus formed a protruded layer on the surface. The formed protruded layer is shown in Fig. 6. This surface protruded layer had a spherical shape and had Ra of 15 µm.

### 3) Evaluation of retention properties against deposits:

For the purpose of evaluating the retention properties of deposits of the sample as obtained above in 2), the sample was used in a site within a plasma etching device where a coating was accumulated. As a result, although the maintenance was usually carried out for every 50 hours, the sample could be continuously used for 100 hours.

### Comparative Example

A member in which a sprayed coating of a crystalline substance was prepared on a quartz glass base material (base material A) coated with an SiO₂ sprayed coating having a surface roughness Ra of 15 µm using oxides of Al and La as the starting raw material in the same manner as in the Examples (No. 16); a member prepared by mechanically polishing the surface of a bulk glass ingot having the same composition as in the sprayed coating used in the Examples such that the surface roughness Ra was 1 µm (No. 17); and a quartz glass base material not provided with a sprayed coating (No. 18) were each measured with respect to the etching rate and the particle amount and subjected to the thermal cycle test (the thermal cycle test was carried out only for No. 16 as a sprayed part) in the same manners as in the Examples.

In the member of No. 16, although the oxide coating of Al and La was low in the etching rate, a number of particles were generated because of a crystalline substance, and the corrosion resistance was poor. Also, in the thermal cycle test for quenching from 800°C to room temperature, the sprayed coating was peeled at the third time. In the glass ingot (No. 17), although the etching rate was low, particles were largely generated as compared with the corrosion resistant members of the Examples. In the quartz glass base material not provided with a corrosion resistant glass sprayed coating (No. 18), the etching rate was high as 5 µm/hr, and the corrosion resistance was poor.

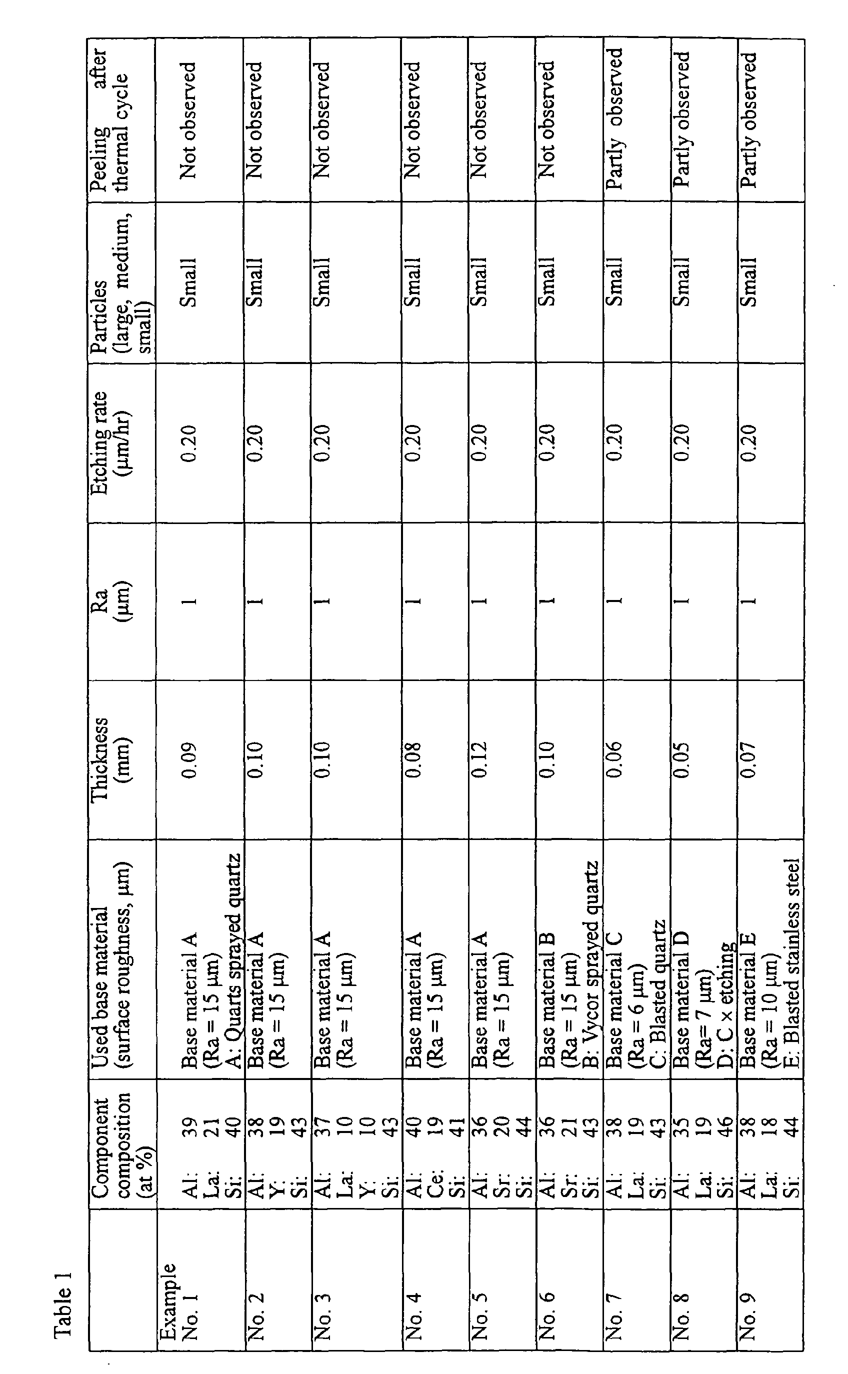

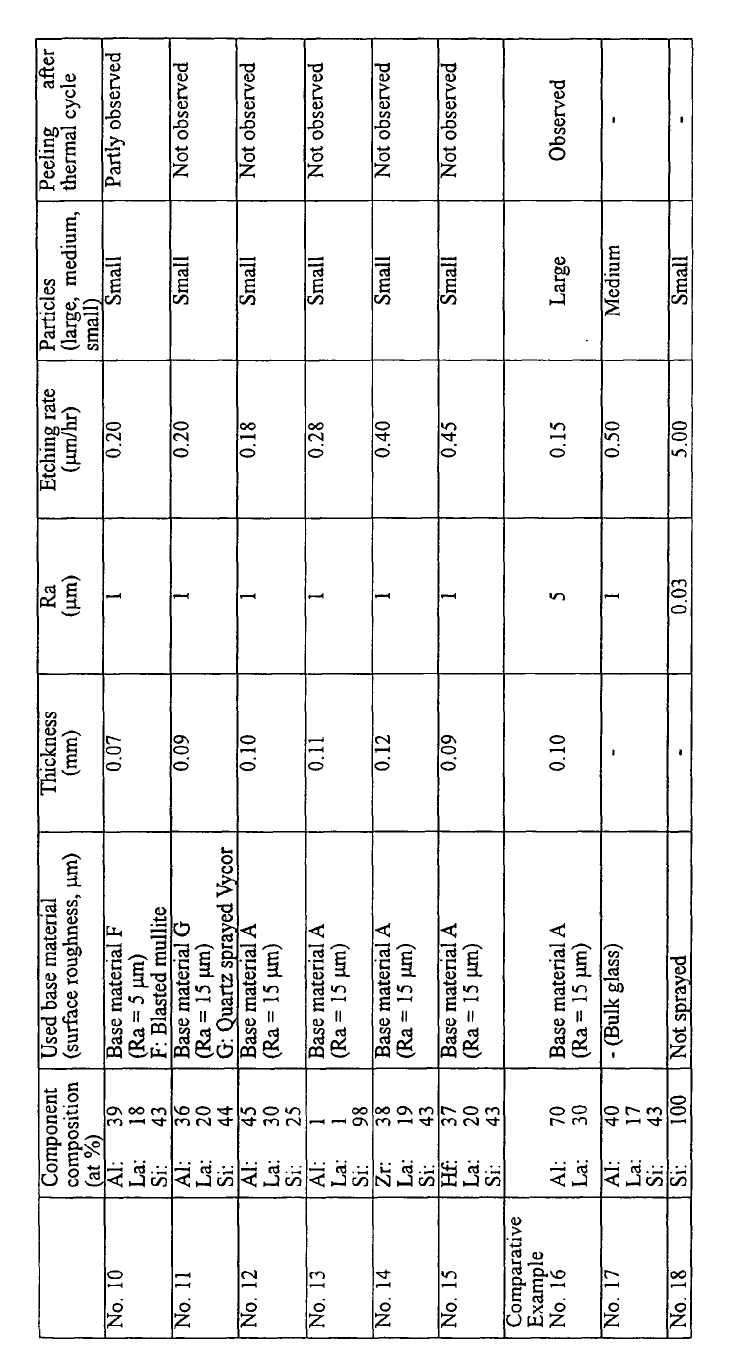

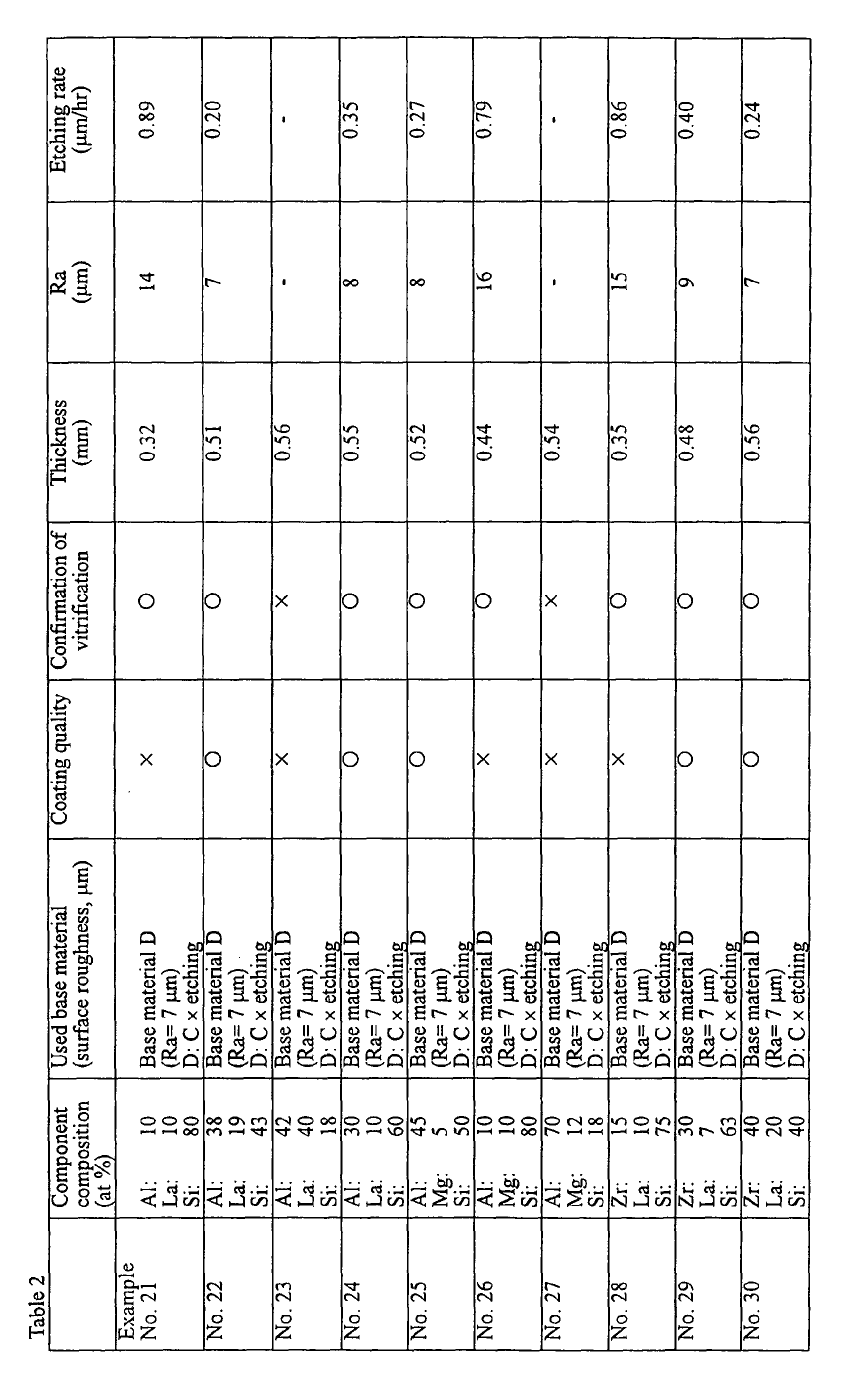

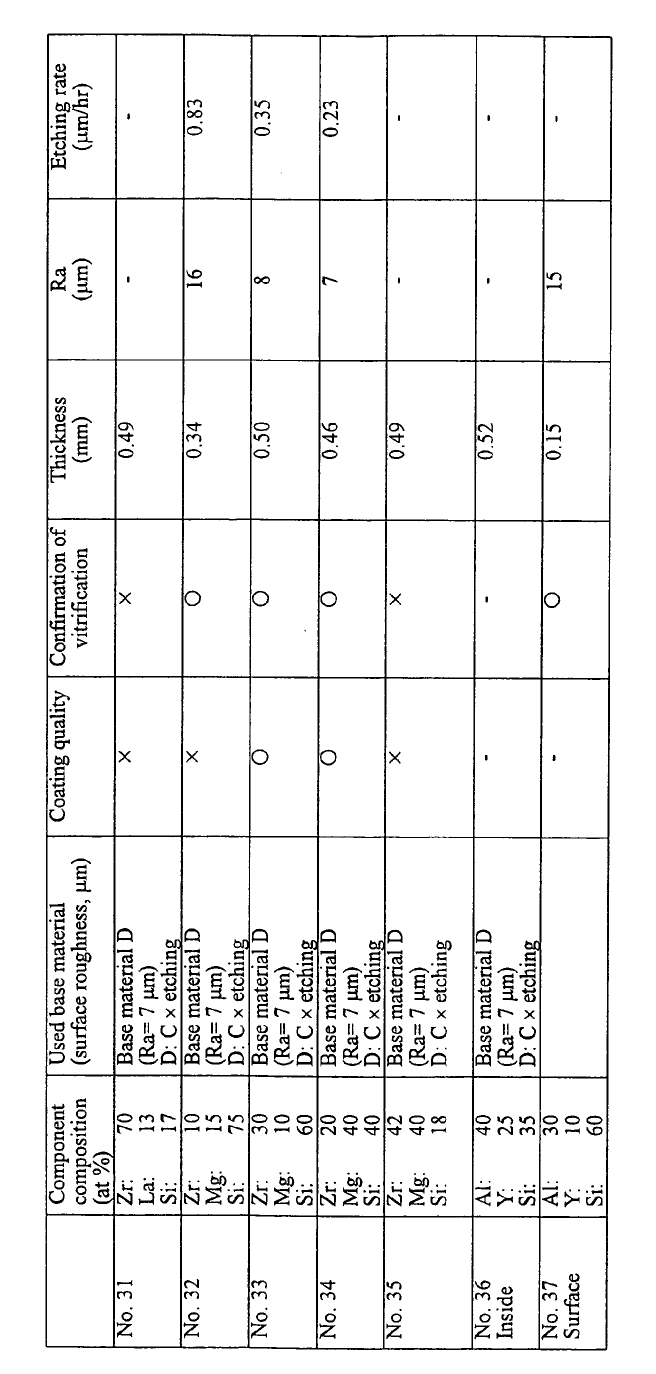

While the invention has been described in detail and with reference to specific embodiments thereof, it will be apparent to one skilled in the art that various changes and modifications can be made therein without departing from the spirit and scope thereof.

This application is based on a Japanese patent application filed January 28, 2003 (Japanese Patent Application No. 2003-18634), the contents of which are incorporated therein and made hereof by reference.

### Industrial Applicability

Since the corrosion resistant member of the invention has the following advantages, in using in devices using corrosive gases or plasma, such as CVD devices and plasma treatment devices, it is possible to achieve continuous operation in a high yield of products without causing generation of particles and staining of products.
1) It has high resistance to corrosive gases or plasma.
2) It can be used in portions where both heat resistance and corrosion resistance are required.
3) It is inexpensive because a small amount of an expensive corrosion resistant glass is coated on a base material.

## Claims

1. A corrosion resistant member comprising a base material sprayed with a corrosion resistant glass sprayed coating which is an aluminosilicate glass or zirconia silicate glass containing at least one element selected from the group consisting of the group 2a, group 3a and group 4a of the periodic table of element.

2. The corrosion resistant member as claimed in claim 1, wherein the corrosion resistant glass sprayed coating is an aluminosilicate glass which comprises at least one element selected from the group consisting of elements of the group 3a of the periodic table of element and which when expressed by an Si-Al-group 3a three-component triangular diagram, has a composition such that the atomic ratio of the respective metal elements (Si:Al:group 3a) falls within the range connecting respective points of (70:20:10), (50:20:30), (30:40:30), (30:50:20), (45:50:5) and (70:25:5).

3. The corrosion resistant member as claimed in claim 1, wherein the corrosion resistant glass sprayed coating is a zirconia silicate glass which comprises at least one element selected from the group consisting of elements of the group 3a of the periodic table of element and which when expressed by an Si-Zr-group 3a three-component triangular diagram, has a composition such that the atomic ratio of the respective metal elements (Si:Zr:group 3a) falls within the range connecting respective points of (70:25:5), (70:10:20), (50:20:30), (30:40:30), (30:50:20) and (45:50:5).

4. The corrosion resistant member as claimed in claim 1, wherein the corrosion resistant glass sprayed coating is a zirconia silicate glass which comprises at least one element selected from the group consisting of elements of the group 2a of the periodic table of element and which when expressed by an Si-Zr-group 2a three-component triangular diagram, has a composition such that the atomic ratio of the respective metal elements (Si:Zr:group 2a) falls within the range connecting respective points of (70:25:5), (45:25:30), (30:40:30), (30:50:20) and (50:45:5).

5. The corrosion resistant member as claimed in claim 1, wherein an interlayer of an SiO₂-containing glass sprayed coating is provided between the base material and the corrosion resistant glass sprayed coating.

6. The corrosion resistant member as claimed in claim 1, wherein an interface between the base material and the corrosion resistant glass sprayed coating, or any one of interfaces among the base material, the interlayer of an SiO₂-containing glass sprayed coating and the corrosion resistant glass sprayed coating forms a molten layer resulting from mutual melting each other.

7. The corrosion resistant member as claimed in claim 1, wherein the corrosion resistant glass sprayed coating has a surface roughness Ra of from 0.01 to 5 µm.

8. A process of producing a corrosion resistant member as claimed in claim 1, which comprises forming a corrosion resistant glass sprayed coating while melting the surface of a base material by a spraying flame.

9. The process of producing a corrosion resistant member according to claim 8, wherein the corrosion resistant glass sprayed coating is made to have a surface roughness Ra of from 0.01 to 5 µm by melting the corrosion resistant glass sprayed coating by a spraying flame.

10. The process of producing a corrosion resistant member according to claim 8, wherein an interlayer of an SiO₂-containing glass sprayed coating and/or a corrosion glass sprayed coating is sprayed on the base material having a surface roughness Ra of from 1 to 50 µm.

11. The corrosion resistant member according to claim 1, wherein a most superficial layer of the sprayed coating forms a spherical protruded layer in which the concentration of at least one of aluminum or zirconia and elements of the group 2a, group 3 a and group 4a is lower than that of the internal sprayed coating.
